# EUROPEAN PATENT SPECIFICATION

(11) **EP 0 834 406 B1**
(45) Date of publication and mention of the grant of the patent: **11.12.2002**
(21) Application number: 97202931.8
(22) Date of filing: 26.09.1997
(51) Int. Cl.: B60B 31/02

(54) **Apparatus for straightening spoked wheels**
Vorrichtung zum Richten von Speichenrädern
Dispositif pour aligner des roues à rayons

(30) Priority: 02.10.1996 NL 1004172
(43) Date of publication of application: 08.04.1998
(73) Proprietor: HOLLAND MECHANICS B.V., 1442 PZ Purmerend (NL)
(72) Inventor: Admiraal, Anthonius Simon, 1906 CT Limmen (NL)
(74) Representative: Uittenbogaart, G. A.

(56) References cited:
- EP-A- 0 476 749
- FR-A- 2 476 310
- US-A- 3 024 834
- US-A- 4 417 237
- US-A- 4 585 046

## Description

The invention relates to equipment according to the preamble of claim 1. Such equipment is known from FR 2476310 A.

In the known equipment the spoke key 44 is driven by a directly coupled motor 5, whereby it is implicitly disclosed that the motor can halt the spoke key 44 in a rotative position whereby the spoke can be inserted or taken out.

The disadvantage of the known equipment is that the motor 5 must start and stop frequently and thereby stop at an exact rotative position. Due to inertia in the motor and drive between motor and spoke key this means that an increased rotation speed of the motor is not possible and therefore the cycle time for straightening a wheel is long.

In order to improve on this the apparatus is designed in accordance with claim 1. This type of motor can bring the spoke key and nipple accurately in a desired position of high acceleration and deceleration thereby considerably reducing the cycle time for straightening wheels. According to a refinement the apparatus is designed in accordance with claim 2. In this way the servomotor has characteristics that ensures a reduced cycle time for straightening wheels.

The invention will now be elucidated with reference to the drawings showing a schematic illustration of the invention.

A rim 1 is laterally fixed by means of side rollers 7. On the rim 1 a spring rule 8 is provided at the side rollers 7 which is movable in a vertical direction A. A hub 3 is attached to the rim 1 by means of spokes 2. The axis of the hub 3 is fixed in a clamping device 4 which is movable in a horizontal direction B. Said movements of the roller 8 and the hub 3 in the respective directions A and B can be measured in the known manner by means of a measuring device.

The circumference of the rim 1 and the number of spokes 2 are determined in a manner which will not be further explained, enabling the control of the device to derive the required nominal distance between the hub 3 and the rim 1 and the required horizontal position of the rim 1 in relation to the hub 3.

The actual position can be determined by means of the known measuring devices attached to the clamping device 4 and the spring rule 8. If the measured values show that the spokes directed toward the rollers 7 and 8 have to be shortened, the nipples are screwed further on the spokes by means of spoke keys attached to an arm 5, which keys are driven by a motor 6. The motor 6 is a servomotor that is able to start and stop quickly, so that there is no need for an extra coupling between the motor 6 and the spoke key. To increase accuracy, the motor 6 is provided with an encoder or a tachogenerator, allowing also accurate reverse turning of the nipples for optimal positioning or, when approaching a calculated desired position, to slowly decelerate the nipple rotation until the nipple comes to a halt at the desired position.

The desired position of a nipple can be calculated by algorithmically coupling the measurements of the position of the hub 3 with respect to the rim 1 with the nipple rotation, whereby the relationship between the relative position of the rim 1 with respect to the hub 3 and the nipple position can be calculated, optionally by taking into account the wheel data available in the control device. The nipple can then be accurately directed to that position.

By means of the device described above it is possible, for instance, to ensure that the distance between the support roller 8 and the hub 3 does not go below a certain minimum value, so that even in the case of loose spokes said distance does not become too small.

When spokes 2 are mounted in the wheel more tightly, there is no danger of screwing on a nipple too firmly because the motor 6, being a servomotor, will stop if the screw torque for the nipple becomes greater than a certain set maximum value, as already described in EP-A-476749. If the motor 6 stops because the nipple has reached a set screw torque, there is obviously no risk of inadvertently indenting the rim 1 due to screwing a nipple too tightly on a spoke.

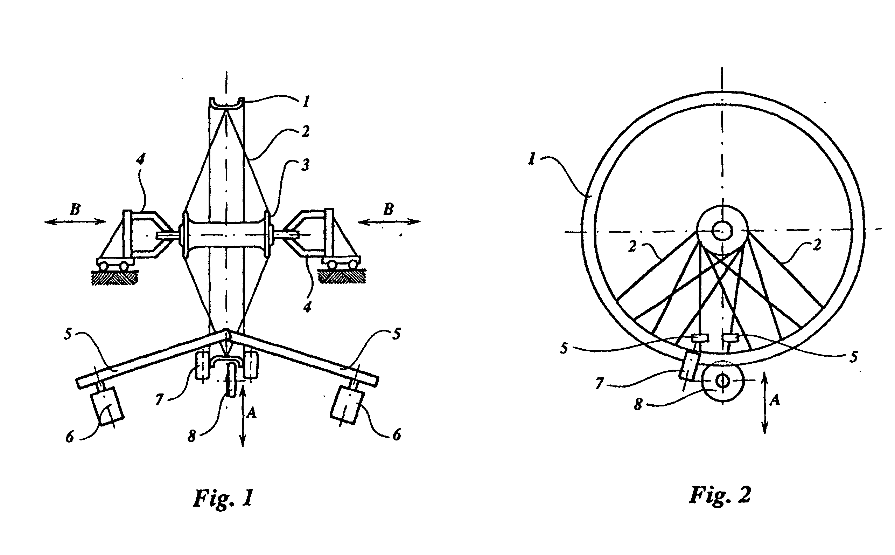

## Claims

1. An apparatus for automatically straightening wheels with a rim (1) and a hub (3) connected by spokes comprising a nipple drive (5,6) for the rotation of nipples and coupled to a spoke key, a measuring device for measuring the movements (A,B) of the rim in relation to the hub which occur due to change of tension in one or more spokes and means for calculating a desired rotation position of a nipple whereby the nipple drive is controllable such that after standstill, the rotation position of the nipple and the spoke key deviate maximally half a revolution from the desired rotation position, the nipple drive (5,6) being provided provided with a servomotor (6) which is able to start and stop quickly **characterized in that** the servomotor is provided with an encoder or a tachogenerator.

2. An apparatus according to claim 1 whereby the servomotor is controllable such that after an appropriate signal the nipple can come to a halt within 0.150 sec.

## Patentansprüche

1. Vorrichtung zum automatischen Zentrieren von Rädern mit einer Felge (1) und einer Nabe (3), die durch Speichen verbunden sind, umfassend einen Nippelantrieb (5, 6) zur Drehung der Nippel und gekoppelt mit einem Speichenschlüssel, eine Messvorrichtung zum Messen der Bewegungen (A, B) der Felge in Bezug auf die Nabe, die auf Grund der Veränderung der Spannung in einer oder mehreren Speichen auftreten, und ein Mittel zum Berechnen einer erwünschten Drehposition eines Nippels, wobei der Nippelantrieb so regelbar ist, dass nach dem Stillstand die Drehposition des Nippels und des Speichenschlüssels höchstens um eine halbe Umdrehung von der gewünschten Drehposition abweicht, wobei der Mippelantrieb (5, 6) mit einem Servomotor (6) ausgestattet ist, der in der Lage ist, schnell anzufahren und anzuhalten, **dadurch gekennzeichnet, dass** der Servomotor mit einer Codiereinrichtung oder einem Tachosignalgeber ausgestattet ist.

2. Vorrichtung nach Anspruch 1, wobei der Servomotor so regelbar ist, dass nach einem geeigneten Signal der Nippel innerhalb 0,150 Sekunden zum Stillstand kommen kann.

## Revendications

1. Dispositif pour redresser ou dévoiler automatiquement des roues avec une jante (1) et un moyeu (3) raccordés par des rayons comprenant un entraîneur d'écrou de rayon (5,6) pour la rotation des écrous et accouplé à une clef de rayon, un dispositif de mesure pour mesurer les mouvements (A,B) de la jante par rapport au moyeu qui se produisent par suite de modification de tension dans un ou plusieurs rayons et des moyens pour calculer une position désirée de rotation d'un écrou pour lesquels l'entraîneur d'écrou de rayon peut être commandé de telle sorte qu'après un arrêt, la position de rotation de l'écrou et de la clef de rayon dévie au maximum de la moitié d'une révolution par rapport à la position de rotation souhaitée, l'entraîneur d'écrou de rayon (5,6) étant doté d'un servomoteur (6) apte à démarrer et à stopper rapidement, **caractérisé en ce que** le servomoteur est muni d'un codeur ou d'une génératrice tachymétrique.

2. Dispositif selon la revendication 1, dans lequel le servomoteur peut être commandé de telle sorte qu'après un signal approprié, l'écrou de rayon peut s'immobiliser dans un lapse de temps de 0,150 seconde.
